# EUROPEAN PATENT SPECIFICATION

(11) **EP 4 666 000 B1**
(45) Date of publication and mention of the grant of the patent: **21.10.2026**
(21) Application number: 24703687.4
(22) Date of filing: 07.02.2024
(51) Int. Cl.: F17C 3/02, F17C 3/08

(54) **CRYOGENIC TANK**
KRYOGENISCHER BEHÄLTER
RÉSERVOIR CRYOGÉNIQUE

(30) Priority: 13.02.2023 EP 23315027
(43) Date of publication of application: 24.12.2025
(73) Proprietor: Cryostar SAS, 68220 Hesingue (FR)
(72) Inventor: LEMOINE, Adrien, 68220 HESINGUE (FR)
(74) Representative: Reuß, Stephanie
(86) International application number: PCT/EP2024/025063
(87) International publication number: WO 2024/170145

(56) References cited:
- CN-A- 107 289 318
- US-A- 4 080 106
- US-A1- 2015 184 645
- US-A1- 2017 102 111
- US-B2- 9 835 294

## Description

The present invention relates to a cryogenic tank for receiving a cryogenic liquid, the tank including a submerged pump inside the tank for pumping cryogenic liquid from inside the tank through a supply line. Generally, the cryogenic tank of the present invention is suited for storing liquified cryogenic gases, such as helium, nitrogen, natural gas or hydrogen.

### Background of the invention

Cryogenic tanks including a submerged pump are frequently used in cryogenic applications. The submerged pump is typically used for pumping cryogenic liquid from inside the tank through a supply line outside of the tank and/or back inside the tank. In known cryogenic tanks, there is the problem of unavoidable heat input into the tank environment due to the limited possible insulation of the tanks as well as lines connected to the tanks, including valves and other connections. One example of a submerged pump is described in US4080106. This leads to a partial evaporation of the cryogenic liquid in the form of boil-off gas inside the tank, which results in a pressure increase in the cryogenic storage system. Depending on the national law requirements, the boil-off gas is either vented to the environment after the operating pressure of the cryogenic storage system has been reached, such that this gas is no longer available for further processes, or it is reliquefied resulting in high technical efforts. Furthermore, boil-off gas is also generated in the downstream piping, valves, pumps and compressors and is often returned to the headspace of the cryogenic tank.

Submerged pumps have the advantage that no cooldown of the pumps and the connecting lines is necessary. This provides advantages compared to pumps outside of the tanks such as the possibility of quick starting the process as no cooldown is necessary, and a significant reduction of boil-off gas.

A problem of the use of submerged pumps in cryogenic tanks, however, is a lack of easiness of maintenance, especially in pressurized tanks. One possibility of getting access to a submerged pump is to completely empty the tank, inert and warm-up the tank before doing maintenance. This is a heavy operation and the time involved for maintenance usually is quite long. As an example, for a 60m³ LNG (liquified natural gas) tank, maintenance usually takes about five days. Another solution would be to use an outer pump in a secondary recipient, the secondary recipient being connected to the cryogenic tank via an inlet line and a return line. In such a case, maintenance can be completed within about two days.

There is a need to provide cryogenic tanks including submerged pumps providing easier ways of doing maintenance without increasing the amount of boil-off gas during normal operation.

### Summary of the invention

The present invention provides a cryogenic tank for receiving a cryogenic liquid according to independent claim 1, said tank including a submerged pump inside the tank for pumping cryogenic liquid from inside the tank through a supply line, wherein the cryogenic tank further comprises a vessel inside the tank, the vessel enclosing the submerged pump, and a piping system configured for alternatively connecting an inside of the vessel with an outside of the tank or with an inside of the tank, wherein the piping system comprises a valve arrangement configured to switch the piping system between the alternative connecting states whereas in that at least a part of the piping system, particularly at least a part of the valve arrangement, particularly at least one of the one or more valves and/or at least one of lines of the piping system, is insulated or vacuum insulated. Alternatively, it may be located in a vacuum chamber and/or is configured as a submerged part located inside the tank.

This embodiment avoids generation of boil-off gas. To this end, if valves outside of the tank are used, it is useful to use vacuum insulated valves and a vacuum insulated piping connected to the valves. This is especially true for the lines which connect the inside of the vessel with the inside of the tank, i.e. in the above embodiments, the connecting line and the first line, respectively.

According to the invention, the submerged pump is located inside the vessel, which can be filled with cryogenic liquid as long as the piping system connects the inside of the vessel with the inside of the tank. To this end, it is useful to connect the piping system to a side at a lower part of the vessel or to the bottom of the vessel. In order to empty the vessel, the piping system connects the inside of the vessel with the outside of the tank such that liquid inside the vessel can be drained. This solution allows, on the one hand, to fill the tank with cryogenic liquid, at the same time filling the vessel inside the tank, and, on the other hand, to easily remove cryogenic liquid from the vessel only. After removing cryogenic liquid from the vessel, maintenance of the submerged pump may be done. The main advantage of the present invention is that the performances of the submerged pumps are kept unchanged (no cool-down time necessary, low boil-off gas generation), and the down time for maintenance can be decreased to a time similar of an external pump in a secondary recipient.

The submerged pump is typically used for pumping cryogenic liquid through a supply line, which connects the inside of the cryogenic tank with a consumer or customer outside of the tank and/or which connects the inside of the tank with a return line for returning at least a part of the cryogenic liquid back into the tank.

In an embodiment, the piping system comprises a valve arrangement configured to switch the piping system between the alternative connecting states, i.e. for alternatively connecting the inside of the vessel with the outside of the tank or with the inside of the tank. The piping system may further comprise pumps, compressors, and further valves. In order to keep the effort at a minimum, no further components apart from said valve arrangement are used for switching the piping system between the alternative connecting states.

In an embodiment, the piping system further comprises a drain line and a connecting line, and the valve arrangement comprises a three-way valve, the three-way valve connecting the inside of the vessel, particularly at a bottom of the vessel, in a first operating state via the drain line with the outside of the tank, and, alternatively, in a second operating state via the connecting line with the inside of the tank. In this embodiment, the drain line connects the vessel with the outside of the tank such that, in the first operating state of the three-way valve, cryogenic liquid from inside the vessel can be drained. The connecting line connects the inside of the vessel with the inside of the tank such that, in the second operating state of the three-way valve, a fluid connection between the vessel and the tank can be established, e.g. for filling the tank and the vessel with cryogenic liquid. It is noted that in this embodiment, the drain line and the connecting line share a common line part, which extends from the three-way valve to the vessel.

In another embodiment, the piping system further comprises a first line and a second line, and the valve arrangement comprises a first valve and a second valve, the first valve, in its open state, connecting the inside of the vessel, particularly at a bottom of the vessel, via the first line with the inside of the tank, and the second valve, in its open state, connecting the inside of the vessel, particularly at a bottom of the vessel, via the second line with the outside of the tank. In this embodiment, the first line connects the inside of the vessel with the inside of the tank such that when the first valve is in its open state, a fluid connection between the vessel and the tank is established. This situation is useful for filling the vessel and the tank with cryogenic liquid. The second line connects the inside of the vessel with the outside of the tank such that when the second valve is in its open state, cryogenic liquid can be drained from the vessel only. Depending on the construction of the piping system in this embodiment, it is useful if not required to close the second valve if the first valve is in its open state, and to close the first valve if the second valve is in its open state.

In this embodiment, the first and second lines may be separate lines or may share a common line part connected to the inside of the vessel. In this case, the common line part extends from the vessel to a branch-off point from where the first line and the first valve continue in a direction back to the inside of the tank and from where the second line and the second valve continue in another direction to a drain point outside the tank.

It is noted that in the above embodiments, by closing the valve arrangement, the vessel can be fully isolated from the remaining tank.

In an embodiment, the vessel is in the form of a column extending in a height dimension through the inside of the tank. The column encloses the submerged pump and forms a limited space inside the tank. The column may extent from the bottom of the tank, at least from the lower half or at least from the lower third of the tank height to the topside of the tank or at least to the upper half or at least to the upper third of the tank height.

In an embodiment, a topside of the inside of the vessel is connected with a topside of the inside of the tank for pressure equalization. In this embodiment, the headspace of the cryogenic tank can be connected to the headspace of the vessel. The connection can be provided by a line connecting the topside of the inside of the vessel with the topside of the inside of the tank, the line including a pressure equalisation valve, which may be a locked open valve. Thereby, the pressure between the gas phase of the vessel or column and the gas phase of the remaining tank is equilibrated.

As already discussed above, the present invention is useful for cryogenic tanks for receiving liquified natural gas (LNG) or liquified hydrogen (LH2) as the cryogenic liquid. However, other kinds of cryogenic liquids are not excluded.

### Brief description of the drawings

- Figure 1: schematically shows a first embodiment of a cryogenic tank according to the present invention in a first state,
- Figure 2: schematically shows a first embodiment of a cryogenic tank according to the present invention in a second state, and
- Figure 3: schematically shows a second embodiment of a cryogenic tank according to the present invention.

### Detailed description of embodiments

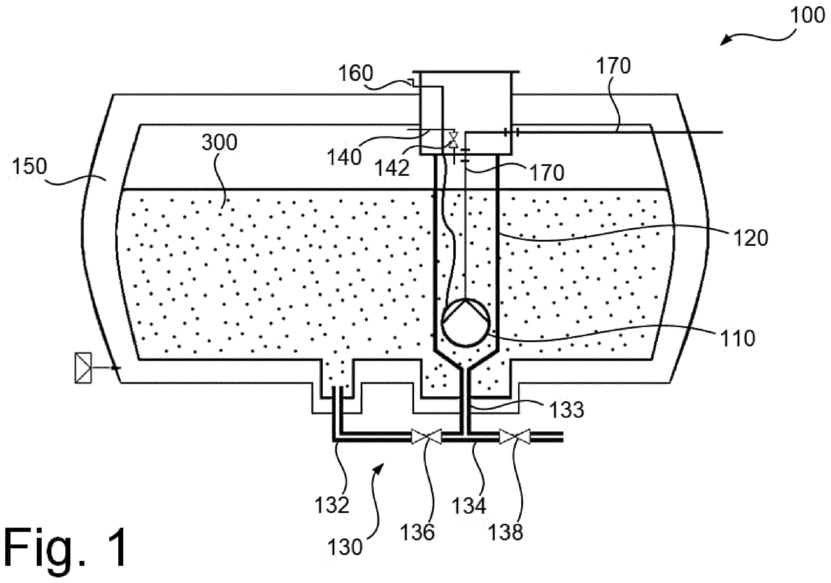

Figure 1 schematically shows a first embodiment of a cryogenic tank 100 for receiving a cryogenic liquid 300 like liquified natural gas (LNG) or liquified hydrogen (LH2). The cryogenic tank 100 includes an insulated tank wall 150 for keeping the heat input from outside the tank to a minimum. The tank 100 includes a submerged pump 110 inside the tank for pumping cryogenic liquid 300 from inside the tank through a supply line 170. The cryogenic liquid is pumped through the supply line 170 outside of the tank to a consumer or customer (not shown). The submerged pump 110 is controlled by means of a schematically shown control line 160.

The use of a submerged pump 110 has the advantage that no cooldown of the pump and the supply line 170 is necessary such that storage of or supply with cryogenic liquid can be started more quickly compared to using pumps outside of the tank, and that generation of boil-off gas is significantly reduced.

As can be seen from Figure 1, the submerged pump 110 is located inside a vessel 120 inside the tank 100. The vessel 120 is connected to a piping system 130, the piping system 130 being configured for alternatively connecting an inside of the vessel 120 with an outside of the tank 100 or with an inside of the tank 100. If the piping system 130 connects the inside of the vessel 120 with the inside of the tank 100, the vessel 120 is filled with cryogenic liquid 300 if the tank 100 is filled with cryogenic liquid 300 according to the principle of "communicating vessels". To this end, it is useful to connect a lower part of the vessel 120 or the bottom of the vessel 120 with the inside of the tank 100 as shown in Figure 1. Figure 1 shows the first state of the tank 100 where the piping system 130 is configured to connect the inside of the vessel 120 with the inside of the tank 100.

In the embodiment of Figure 1, the piping system 130 comprises a first line 132 and a valve arrangement, here a first valve 136. In an open state of the first valve 136, the inside of the vessel 120 is connected to the inside of the tank 100 such that cryogenic liquid can be exchanged between the tank 100 and the vessel 120 according to the principle of "communicating vessels". In this embodiment, the first valve 136 may be a vacuum insulated manual or automatic valve; the first line 132 may be a vacuum insulated line. Alternatively, the piping system 130 or components like the first valve 136 and the first line 132, may be located in a vacuum chamber or be configured as submerged parts, i.e. at least partly arranged, for instance, inside the tank 100.

As can be further seen from Figure 1, the vessel 120 is in the form of a column extending in a height dimension through the inside of the tank 100, and a topside of the inside of the vessel 120 is connected with a topside of the inside of the tank 100 for pressure equalization. In the embodiment shown, a line 140 is used for connecting the headspaces of the tank 100 and of the vessel 120, the line 140 including a pressure equalization valve 142.

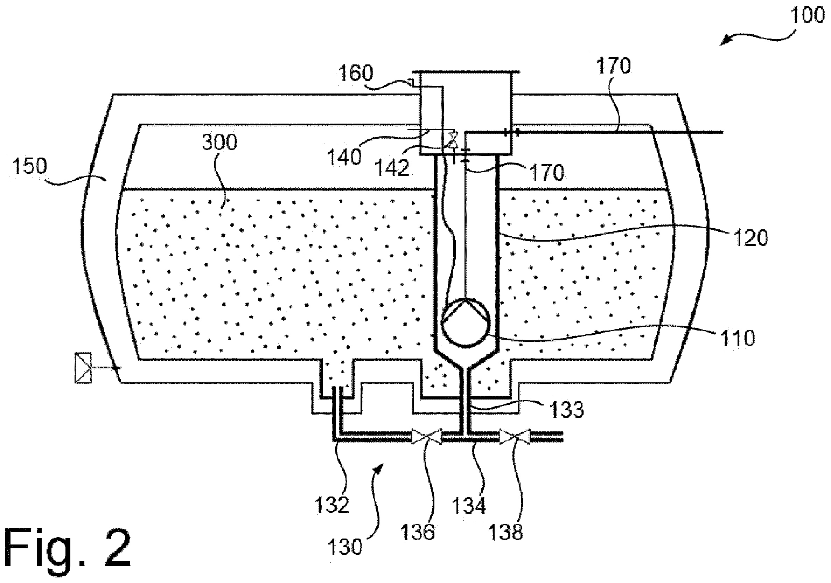

As can be further seen from Figures 1 and 2, the piping system 130 further includes a second line 134, and the valve arrangement further includes a second valve 138. In its open state, the second valve 138 allows cryogenic liquid 300 to drain from the inside of the vessel 120 outside of the tank 100. Thus, in order to empty the vessel 120, the piping system 130 connects the inside of the vessel 120 with the outside of the tank 100. After removing cryogenic liquid 300 from the vessel 120, maintenance of the submerged pump 110 may be done without the need of emptying the tank 100 leading to longer maintenance interruption times. This second state of the tank 100 is shown in Figure 2.

Figure 2 shows the same tank 100 as Figure 1, tank 100 being, however, in a second state where cryogenic liquid 300 is removed from the inside of the vessel 120. To this end, the second valve 138 is opened. In the embodiment shown in Figures 1 and 2, it is recommended to close the first valve 136 as soon as the second valve 138 is opened, and, vice versa, to close the second valve 138 as soon as the first valve 136 is opened. It should be noted that the first line 132 and the second line 134 may be separated lines both connected to the vessel 120, or, as in the present embodiment, may share a common line part 133 connected to the inside of the vessel 120. At a branch-off point the first line 132 and the second line 134 start to continue separately.

In order to avoid unnecessary heat input, also the second line 134 and/or the second valve 138 may be vacuum insulated or located in a vacuum chamber or configured, at least partly, as submerged parts located inside the tank 100.

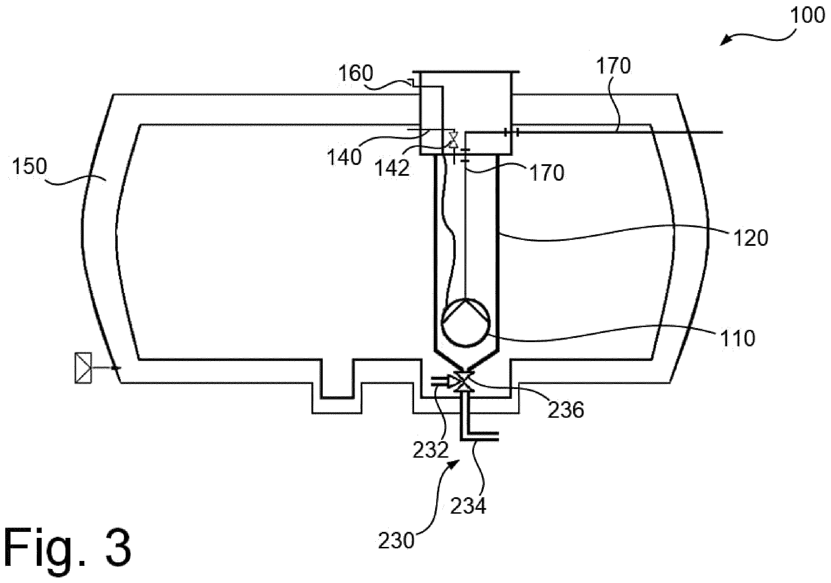

Figure 3 schematically shows another embodiment of a cryogenic tank 100 for receiving a cryogenic liquid 300. Reference is made to the embodiment according to Figures 1 and 2. Only the differences to this embodiment are described in the following. Again, the cryogenic tank 100 according to the embodiment of Figure 3 comprises a vessel 120 inside the tank 100, the vessel enclosing the submerged pump 120. Furthermore, the cryogenic tank 100 comprises a piping system 230 configured for alternatively connecting an inside of the vessel 120 with an outside of the tank 100 or with an inside of the tank 100. The piping system 230 comprises a valve arrangement, in this case a three-way valve 236 configured to switch the piping system 230 between the alternative connecting states. In this embodiment, the piping system 230 comprises a drain line 234 and a connecting line 232, the three-way valve 236 connecting the inside of the vessel in a first operating state via the drain line 234 with the outside of the tank 100, and, alternatively, in a second operating state via the connecting line 232 with the inside of the tank 100.

For filling up the tank 100 and the vessel 120 or for balancing the respective filling levels, the three-way valve 236 is switched into its second operating state such that cryogenic liquid can be exchanged between the inside of the tank 100 via connecting line 232 and the inside of the vessel 120. In order to empty only the vessel 120, the three-way valve 236 is switched to its first operating state such that the inside of the vessel 120 is connected via drain line 234 with the outside of the tank 100. Regarding further advantages and optional embodiments of the embodiment of Figure 3, reference is made to the embodiment according to Figures 1 and 2. For example, the three-way valve 236 and/or the drain line 234 and the connecting line 232 may be, at least in part, vacuum insulated and/or located in a vacuum chamber instead of being configured as a submerged part located inside the tank 100 as shown in Figure 3.

## Claims

1. A cryogenic tank (100) for receiving a cryogenic liquid (300), said tank (100) including a submerged pump (110) inside the tank for pumping cryogenic liquid from inside the tank through a supply line (170),
wherein the cryogenic tank (100) further comprises a vessel (120) inside the tank, the vessel enclosing the submerged pump, **characterised in** a piping system (130, 230) configured for alternatively connecting an inside of the vessel with an outside of the tank (100) or with an inside of the tank (100) wherein the piping system (130, 230) comprises a valve arrangement (136, 138; 236) configured to switch the piping system (130, 230) between the alternative connecting states **characterized in that** at least a part of the piping system (130, 230), particularly at least a part of a valve arrangement, particularly at least one of the one or more valves (136, 138; 236) and/or at least one of lines (132, 134; 232, 234) of the piping system (130, 230), is insulated or vacuum insulated and/or is located in a vacuum chamber and/or is configured as a submerged part located inside the tank.

2. The cryogenic tank (100) of claim 1, wherein the piping system (230) further comprises a drain line (234) and a connecting line (232), and the valve arrangement comprises a three-way valve (236), the three-way valve (236) connecting the inside of the vessel (120), particularly at a bottom of the vessel, in a first operating state via the drain line (234) with the outside of the tank (100), and, alternatively, in a second operating state via the connecting line (232) with the inside of the tank (100).

3. The cryogenic tank (100) according to claim 2, wherein the piping system (130) further comprises a first line (132) and a second line (134), and the valve arrangement comprises a first valve (136) and a second valve (138), the first valve (136), in its open state, connecting the inside of the vessel (120), particularly at a bottom of the vessel, via the first line (132) with the inside of the tank (100), and the second valve (138), in its open state, connecting the inside of the vessel (120), particularly at a bottom of the vessel, via the second line (134) with the outside of the tank (100).

4. The cryogenic tank (100) of claim 3, wherein the first and second lines (132, 134) share a common line part (133) connected to the inside of the vessel (120).

5. The cryogenic tank (100) according to claim 1, wherein at least one of the three-way valve (236) of claim 3 and the first and second valves (136, 138) of claim 4 is a vacuum insulated valve and/or is located in a vacuum chamber and/or is configured as a submerged valve located inside the tank.

6. The cryogenic tank (100) according to any one of the preceding claims, wherein the vessel (120) is in the form of a column extending in a height dimension through the inside of the tank (100).

7. The cryogenic tank (100) according to any one of the preceding claims, wherein a topside of the inside of the vessel (120) is connected with a topside of the inside of the tank (100) for pressure equalisation.

8. The cryogenic tank (100) according to claim 7, wherein the connection is provided by a line (140) connecting the topside of the inside of the vessel (120) with the topside of the inside of the tank (100), the line (149) including a pressure equalisation valve (142).

9. The cryogenic tank (100) according to any one of the preceding claims, wherein the cryogenic liquid is liquified natural gas or liquified hydrogen.

## Patentansprüche

1. Kryotank (100) zum Aufnehmen einer Kryoflüssigkeit (300), wobei der Tank (100) eine Tauchpumpe (110) im Inneren des Tanks zum Pumpen von Kryoflüssigkeit aus dem Inneren des Tanks durch eine Zuleitung (170) einschließt,
wobei der Kryotank (100) ferner einen Behälter (120) im Inneren des Tanks umfasst, der Behälter die Tauchpumpe umschließt, **gekennzeichnet durch** ein Rohrleitungssystem (130, 230), das konfiguriert ist, um alternativ ein Inneres des Behälters mit einem Äußeren des Tanks (100) oder mit einem Inneren des Tanks (100) zu verbinden, wobei das Rohrleitungssystem (130, 230) eine Ventilanordnung (136, 138; 236) umfasst, die konfiguriert ist, um das Rohrleitungssystem (130, 230) zwischen den alternativen Verbindungszuständen umzuschalten**, dadurch gekennzeichnet, dass** mindestens ein Teil des Rohrleitungssystems (130, 230), insbesondere mindestens ein Teil einer Ventilanordnung, insbesondere mindestens eines des einen oder der mehreren Ventile (136, 138; 236) und/oder mindestens eine der Leitungen (132, 134; 232, 234) des Rohrleitungssystems (130, 230), isoliert oder vakuumisoliert ist und/oder sich in einer Vakuumkammer befindet und/oder als ein eingetauchtes Teil konfiguriert ist, das sich im Inneren des Tanks befindet.

2. Kryotank (100) nach Anspruch 1, wobei das Rohrleitungssystem (230) ferner eine Ablassleitung (234) und eine Verbindungsleitung (232) umfasst und die Ventilanordnung ein Dreiwegeventil (236) umfasst, wobei das Dreiwegeventil (236) das Innere des Behälters (120), insbesondere an einem Boden des Behälters, in einem ersten Betriebszustand über die Ablassleitung (234) mit dem Äußeren des Tanks (100) und alternativ in einem zweiten Betriebszustand über die Verbindungsleitung (232) mit dem Inneren des Tanks (100) verbindet.

3. Kryotank (100) nach Anspruch 2, wobei das Rohrleitungssystem (130) ferner eine erste Leitung (132) und eine zweite Leitung (134) umfasst und die Ventilanordnung ein erstes Ventil (136) und ein zweites Ventil (138) umfasst, wobei das erste Ventil (136) in seinem geöffneten Zustand das Innere des Behälters (120), insbesondere an einem Boden des Behälters, über die erste Leitung (132) mit dem Inneren des Tanks (100) verbindet, und das zweite Ventil (138) in seinem geöffneten Zustand das Innere des Behälters (120), insbesondere an einem Boden des Behälters, über die zweite Leitung (134) mit dem Äußeren des Tanks (100) verbindet.

4. Kryotank (100) nach Anspruch 3, wobei die erste und die zweite Leitung (132, 134) einen gemeinsamen Leitungsteil (133) teilen, der mit dem Inneren des Behälters (120) verbunden ist.

5. Kryotank (100) nach Anspruch 1, wobei mindestens eines von dem Dreiwegeventil (236) nach Anspruch 3 und dem ersten und zweiten Ventil (136, 138) nach Anspruch 4 ein vakuumisoliertes Ventil ist und/oder sich in einer Vakuumkammer befindet und/oder als ein Tauchventil konfiguriert ist, das sich im Inneren des Tanks befindet.

6. Kryotank (100) nach einem der vorstehenden Ansprüche, wobei der Behälter (120) in der Form einer Säule vorliegt, die sich in einer Höhendimension durch das Innere des Tanks (100) erstreckt.

7. Kryotank (100) nach einem der vorstehenden Ansprüche, wobei eine Oberseite des Inneren des Behälters (120) mit einer Oberseite des Inneren des Tanks (100) für einen Druckausgleich verbunden ist.

8. Kryotank (100) nach Anspruch 7, wobei die Verbindung durch eine Leitung (140) bereitgestellt wird, die die Oberseite des Inneren des Behälters (120) mit der Oberseite des Inneren des Tanks (100) verbindet, wobei die Leitung (149) ein Druckausgleichsventil (142) einschließt.

9. Kryotank (100) nach einem der vorstehenden Ansprüche, wobei die Kryoflüssigkeit verflüssigtes Erdgas oder verflüssigter Wasserstoff ist.

## Revendications

1. Réservoir (100) cryogénique permettant de recevoir un liquide cryogénique (300), ledit réservoir (100) comportant une pompe immergée (110) à l'intérieur du réservoir, permettant de pomper un liquide cryogénique depuis l'intérieur du réservoir à travers une conduite d'alimentation (170),
dans lequel le réservoir (100) cryogénique comprend en outre une cuve (120) à l'intérieur du réservoir, la cuve enfermant la pompe immergée, **caractérisé par** un système de tuyauterie (130, 230) conçu pour raccorder alternativement un intérieur de la cuve à un extérieur du réservoir (100) ou à un intérieur du réservoir (100) dans lequel le système de tuyauterie (130, 230) comprend un agencement de vanne (136, 138 ; 236) conçu pour commuter le système de tuyauterie (130, 230) entre les états de raccordement alternatifs **caractérisé en ce qu'**au moins une partie du système de tuyauterie (130, 230), en particulier au moins une partie d'un agencement de vanne, en particulier au moins l'une parmi la ou les vannes (136, 138 ; 236) et/ou au moins l'une parmi les conduites (132, 134 ; 232, 234) du système de tuyauterie (130, 230), est isolée ou isolée sous vide et/ou est localisée dans une chambre à vide et/ou est conçue en tant que partie immergée localisée à l'intérieur du réservoir.

2. Réservoir (100) cryogénique selon la revendication 1, dans lequel le système de tuyauterie (230) comprend en outre une conduite de drainage (234) et une conduite de raccordement (232), et l'agencement de vanne comprend une vanne à trois voies (236), la vanne à trois voies (236) raccordant l'intérieur de la cuve (120), en particulier au niveau d'un fond de la cuve, dans un premier état de fonctionnement par l'intermédiaire de la conduite de drainage (234), à l'extérieur du réservoir (100), et, alternativement, dans un second état de fonctionnement par l'intermédiaire de la conduite de raccordement (232), à l'intérieur du réservoir (100).

3. Réservoir (100) cryogénique selon la revendication 2, dans lequel le système de tuyauterie (130) comprend en outre une première conduite (132) et une seconde conduite (134), et l'agencement de vanne comprend une première vanne (136) et une seconde vanne (138), la première vanne (136), dans son état ouvert, raccordant l'intérieur de la cuve (120), en particulier au niveau d'un fond de la cuve, par l'intermédiaire de la première conduite (132), à l'intérieur du réservoir (100), et la seconde vanne (138), dans son état ouvert, raccordant l'intérieur de la cuve (120), en particulier au niveau d'un fond de la cuve, par l'intermédiaire de la seconde conduite (134), à l'extérieur du réservoir (100).

4. Réservoir (100) cryogénique selon la revendication 3, dans lequel les première et seconde conduites (132, 134) partagent une partie de conduite commune (133) raccordée à l'intérieur de la cuve (120).

5. Réservoir (100) cryogénique selon la revendication 1, dans lequel au moins l'une de la vanne à trois voies (236) de la revendication 3 et des première et seconde vannes (136, 138) de la revendication 4 est une vanne isolée sous vide et/ou est localisée dans une chambre à vide et/ou est conçue en tant que vanne immergée localisée à l'intérieur du réservoir.

6. Réservoir (100) cryogénique selon l'une quelconque des revendications précédentes, dans lequel la cuve (120) est sous la forme d'une colonne s'étendant dans une dimension en hauteur à travers l'intérieur du réservoir (100).

7. Réservoir (100) cryogénique selon l'une quelconque des revendications précédentes, dans lequel un côté supérieur de l'intérieur de la cuve (120) est raccordé à un côté supérieur de l'intérieur du réservoir (100) pour une égalisation de pression.

8. Réservoir (100) cryogénique selon la revendication 7, dans lequel le raccordement est fourni par une conduite (140) raccordant le côté supérieur de l'intérieur de la cuve (120) au côté supérieur de l'intérieur du réservoir (100), la conduite (149) comportant une vanne d'égalisation de pression (142).

9. Réservoir (100) cryogénique selon l'une quelconque des revendications précédentes, dans lequel le liquide cryogénique est du gaz naturel liquéfié ou de l'hydrogène liquéfié.
